# EUROPÄISCHE PATENTANMELDUNG

(11) **EP 0 991 150 A2**
(43) Veröffentlichungstag der Anmeldung: **05.04.2000**
(21) Anmeldenummer: 99114631.7
(22) Anmeldetag: 26.07.1999
(51) Int. Cl.: H01R 33/05, B60Q 3/02

(54) **Elektrische Anschlussvorrichtung**

(30) Priorität: 29.09.1998 DE 19844694
(71) Anmelder: Delphi Technologies, Inc., Troy, MI 48007 (US)
(72) Erfinder: Gärtner, Markus, 42105 Wuppertal (DE)
(74) Vertreter: Manitz, Finsterwald & Partner

(57) **Zusammenfassung**

Eine Anschlußvorrichtung 10 dient dem elektrischen Anschluß einer insbesondere flexiblen gedruckten Schaltung 12 an einen Verbraucher 14, der zwischen zwei elektrisch leitenden, an einem Basisteil 16 fixierbaren Kontaktbügeln 18 einsetzbar ist. An das nicht leitende Basisteil 16 ist ein in einer Schließstellung mit diesem verrastbarer Klemmbügel 22 angelenkt. Am Klemmbügel ist ein Positionierkörper 26 vorgesehen, durch den bei in seine Schließstellung verschwenktem Klemmbügel 22 wenigstens ein leitender Bereich 28 der gedruckten Schaltung 12 gegen einen vorzugsweise federnden Kontaktabschnitt 30 eines Kontaktbügels 18 gepreßt wird. Eine solche Anschlußvorrichtung 10 ist insbesondere für eine Fahrzeuginnenleuchte geeignet.

## Beschreibung

Die Erfindung betrifft eine Anschlußvorrichtung für einen elektrischen Anschluß einer insbesondere flexiblen gedruckten Schaltung an einen Verbraucher, der zwischen zwei elektrisch leitenden, an einem Basisteil fixierbaren Kontaktbügeln einsetzbar ist, insbesondere für eine Fahrzeuginnenleuchte.

Bisher war es allgemein üblich, flexible gedruckte Schaltungen (FPC) für einen elektrischen Anschluß an den betreffenden Verbraucher mit Klemmanschlüssen zu bestücken. Derartige Klemmanschlüsse weisen Stecker oder Steckerbuchsen auf, über die dann die Verbindung zu dem in einem Aufnahmesockel angeordneten Verbraucher hergestellt wird, der dazu mit einem Stecker- oder Buchsengegenstück versehen ist. Derartige Stecker bzw. Buchsen sind im allgemeinen in einem hierfür vorgesehenen Gehäuse aufgenommen. Bei einfachen Anwendungsfällen, wie dies beispielsweise bei einer Fahrzeuginnenleuchte der Fall ist, machen die insbesondere durch das Anbringen von Klemmanschlüssen bedingten Montageschritte sowie die Materialkosten für solche Klemmanschlüsse einen wesentlichen Teil der Gesamtkosten aus. Ferner sind für die jeweiligen Montageschritte in der Regel spezielle Fertigungswerkzeuge erforderlich. Zudem ist die Qualität des Endprodukts ist maßgeblich durch die Montage der Klemmanschlüsse sowie das anschließende Verbinden mit dem Gegenstück bestimmt. Angesichts einer Vielzahl möglicher Fehlerquellen bei der Montage ist der Aufwand zur Gewährleistung einer möglichst gleichbleibenden Fertigungsqualität relativ hoch. Von Nachteil ist auch, daß eine beispielsweise durch Verkrimpen oder dergleichen hergestellte Verbindung nachträglich nicht mehr lösbar ist.

Ziel der Erfindung ist es, eine im Aufbau möglichst einfach gehaltene kostengünstige Anschlußvorrichtung der eingangs genannten Art zu schaffen, mit der der elektrische Anschlüß der gedruckten Schaltung an den betreffenden Verbraucher vereinfacht und insbesondere auch ohne Werkzeuge und ohne besondere Verfahrensschritte möglich ist.

Diese Aufgabe wird nach der Erfindung dadurch gelöst, daß an das nicht leitende Basisteil ein in einer Schließstellung mit diesem verrastbarer Klemmbügel angelenkt ist und daß am Klemmbügel ein Positionierkörper vorgesehen ist, durch den bei in seine Schließstellung verschwenktem Klemmbügel wenigstens ein leitender Bereich der gedruckten Schaltung gegen einen vorzugsweise federnden Kontaktabschnitt eines Kontaktbügels gepreßt wird.

Aufgrund dieser Ausbildung ergibt sich insgesamt ein äußerst einfacher Aufbau bei einer minimalen Anzahl von Bauteilen, so daß eine kostengünstige Herstellung der Anschlußvorrichtung gewährleistet ist. Mit dem integrierten Klemmbügel ist insbesondere auch eine äußerst einfache Handhabung sichergestellt. Der elektrische Anschluß kann ohne besondere Werkzeuge erfolgen. Dabei sind auch keine besonderen Fertigungsprozesse mehr erforderlich. So entfällt beispielsweise das bisher häufig angewandte Verkrimpen. Mit der geringeren Anzahl von Einzelteilen ergibt sich auch ein wesentlich einfacherer Zusammenbau. Der durch den am Basisteil angelenkten Klemmbügel geführte Positionskörper erfüllt eine doppelte Funktion. So wird durch diesen Positionskörper bei in seine Schließstellung verschwenkten Klemmbügel sowohl die gedruckte Schaltung am Basisteil bzw. an dem an diesem befestigten Kontaktbügeln fixiert als auch der gewünschte elektrische Kontakt zwischen der gedruckten Schaltung und einem jeweiligen Kontaktbügel hergestellt. Die erfindungsgemäße Anschlußvorrichtung ist insbesondere für eine Fahrzeuginnenleuchte geeignet. Diese kann beispielsweise eine Soffittenlampe umfassen.

Bei einer bevorzugten praktischen Ausführungsform der erfindungsgemäßen Anschlußvorrichtung ist der Klemmbügel über wenigstens ein Filmscharnier an das Basisteil angelenkt, wodurch die Herstellung des mit dem integriertem Klemmteil versehenen Basisteils zusätzlich vereinfacht ist.

Im Hinblick auf eine möglichst optimale Positionierung der gedruckten Schaltung sowie einen möglichst optimalen Kontakt zwischen der gedruckten Schaltung und einem jeweiligen Kontaktbügel ist es von Vorteil, wenn der Positionskörper so ausgebildet und durch den verschwenkbaren Klemmbügel so geführt ist, daß mit einem Verschwenken des Klemmbügels in seine Schließstellung der leitende Bereich der gedruckten Schaltung zunächst zum federnden Kontaktabschnitt des betreffenden Kontaktbügels hin gefaltet wird.

Bei einer bevorzugten praktischen Ausführungsform ist der am Klemmbügel vorgesehene Positionierkörper in einen zwischen den beiden Kontaktbügeln liegenden Bereich verschwenkbar. Hierbei ist der Klemmbügel zweckmäßigerweise auf die von den Kontaktbügeln abgewandte Seite des Basisteils schwenkbar und der Positionierkörper durch eine im Basisteil vorgesehene Öffnung hindurch in den zwischen den beiden Kontaktbügeln liegenden Bereich bewegbar. Die zwischen das Basisteil und die Kontaktbügel eingesetzte gedruckte Schaltung kann in dem zwischen den beiden Kontaktbügeln liegenden Bereich geschlitzt sein.

Der an einem Ende eines jeweiligen Kontaktbügels vorgesehene Kontaktabschnitt kann beispielsweise U-förmig ausgebildet sein, wobei die beiden Schenkel der U-Form zum restlichen Kontaktbügel hin allgemein V-förmig abgebogen sind. Dabei wird ein jeweiliger leitender Bereich der gedruckten Schaltung vorzugsweise gegen den entsprechend federnden Steg des betreffenden U-förmigen Kontaktabschnitts gepreßt.

Der Basiskörper kann beispielsweise einer Lampenhalterung einer Fahrzeuginnenleuchte zugeordnet sein. Eine solche Fahrzeuginnenleuchte kann beispielsweise eine Soffittenlampe umfassen.

Die Erfindung wird im folgenden anhand eines Ausführungsbeispiels unter Bezugnahme auf die Zeichnung näher erläutert; in dieser zeigen:
- Figur 1: eine schematische Darstellung einer Ausführungsform einer Anschlußvorrichtung,
- Figur 2: eine schematische Teildarstellung der beiden Kontaktbügel mit an diesen positionierter gedruckter Schaltung vor einer Beaufschlagung durch den Positionierkörper,
- Figur 3: eine vergrößerte schematische Teildarstellung der einander gegenüberliegenden, auf dem Basisteil angeordneten Enden der Kontaktbügel, wobei ein leitender Bereich der gedruckten Schaltung durch den Positionierkörper bereits zum federnden Kontaktabschnitt eines Kontaktbügels hin gefaltet wurde und gegen diesen gepreßt wird,
- Figur 4: eine vergrößerte schematische Teildarstellung der einander gegenüberliegenden, auf dem Basisteil angeordneten Enden der Kontaktbügel bei in seine Schließstellung verschwenktem Klemmbügel,
- Figur 5: eine schematische Teildarstellung der beiden Kontaktbügel mit dazwischen eingesetztem Verbraucher, wobei überdies ein zugeordneter Grundrahmen gezeigt ist,
- Figur 6: eine schematische Rückansicht der Anschlußvorrichtung bei seine Offenstellung einnehmendem Klemmbügel und
- Figur 7: eine schematische Rückansicht der Anschlußvorrichtung bei in die Schließstellung verschwenktem Klemmbügel

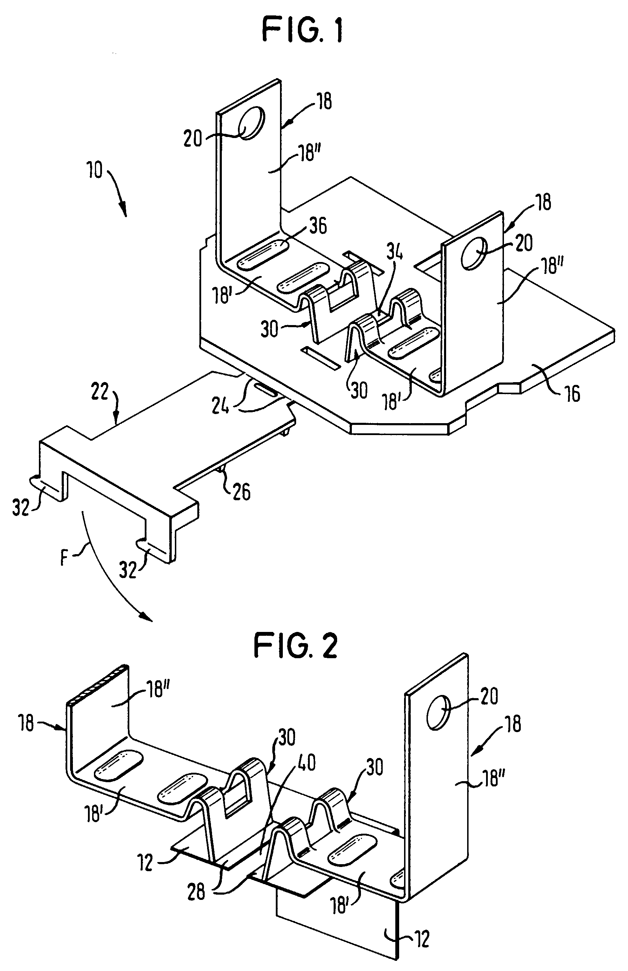

In den Figuren 1 bis 7 ist in schematischer Darstellung eine Ausführungsform einer Anschlußvorrichtung 10 gezeigt, die dem elektrischen Anschluß einer flexiblen gedruckten Schaltung 12 an einen Verbraucher 14 dient, bei dem es sich im vorliegenden Fall um eine Fahrzeuginnenleuchte handelt. Eine solche Fahrzeuginnenleuchte kann beispielsweise eine Soffittenlampe umfassen.

Der Verbraucher 14 ist zwischen zwei elektrisch leitenden, an einem Basisteil 16 fixierbaren Kontaktbügeln 18 einsetzbar. Hierzu ist jeder der beiden Kontaktbügel 18 am freien Ende seines gegenüber dem am Basisteil 16 fixierten Schenkel 18' rechtwinklig nach oben gebogenen Schenkel 18'' mit einer Öffnung 20 (vgl. insbesondere die Figuren 1 und 2) versehen.

Wie anhand der Figur 1 zu erkennen ist, ist an das nicht leitende Basisteil 16 ein in einer Schließstellung mit diesem verrastbarer Klemmbügel 22 angelenkt. Im vorliegenden Fall ist der Klemmbügel 22 über ein Filmscharnier 24 mit dem Basisteil 16 verbunden.

Am Klemmbügel 22 ist ein Positionierkörper 26 vorgesehen, durch den bei in seine Schließstellung verschwenktem Klemmbügel 22 wenigstens ein leitender Bereich 28 der gedruckten Schaltung 12 gegen einen federnden Kontaktabschnitt 30 eines Kontaktbügels 18 gepreßt wird.

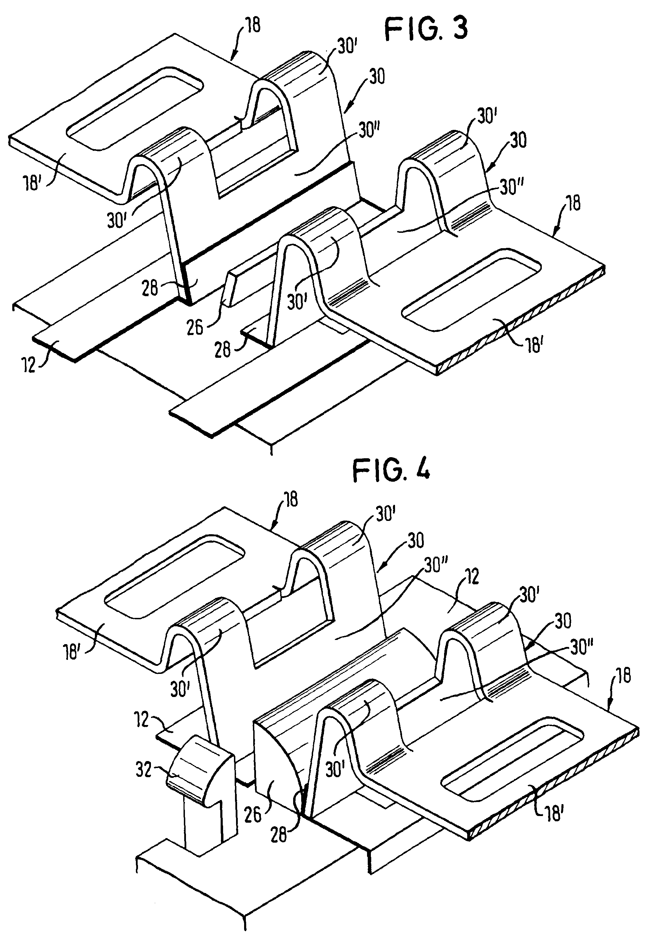

Zur Verrastung des Klemmbügels 22 in dessen Schließstellung sind an dessen freiem Ende zwei Rastnasen 32 vorgesehen, die mit entsprechenden Gegenstücken am Basisteil 16 zusammenwirken (siehe insbesondere Figuren 1 und 4).

Der Positionskörper 26 ist so ausgebildet und durch den verschwenkbaren Klemmbügel 22 so geführt, daß mit einem Verschwenken des Klemmbügels 22 in seine Schließstellung der leitende Bereich 28 der gedruckten Schaltung 12 zunächst zum federnden Kontaktabschnitt 30 des betreffenden Kontaktbügels 18 hin gefaltet wird (vgl. insbesondere die Figuren 3 und 4). Dabei kann, wie am besten anhand der Figur 4 zu erkennen ist, die Ausbildung und Führung des Positionierkörpers 26 so gewählt sein, daß mit einem Verschwenken des Klemmbügels 22 in seine Schließstellung eine kontinuierlich zunehmende Kontaktkraft zwischen dem leitenden Bereich 28 und dem betreffenden federnden Kontaktabschnitt 18 erzeugt wird.

Wie am besten den Figuren 3 und 4 entnommen werden kann, ist der am Klemmbügel 22 vorgesehene Positionierkörper 26 in einen zwischen den beiden Enden der am Basisteil 16 fixierten Schenkel 18' der Konaktbügel 18 liegenden Bereich verschwenkbar. Dabei ist der Klemmbügel 22 in Richtung des Pfeiles F gemäß Figur 1 auf die von den Kontaktbügeln 18 abgewandte Seite des Basisteils 16 verschwenkbar und der am Klemmbügel 22 vorgesehene Positionierkörper 26 durch eine im Basisteil 16 vorgesehene Öffnung 34 hindurch in den genannten Bereich zwischen die beiden Kontaktbügeln 18 bewegbar. Wie insbesondere anhand der Figuren 2 bis 5 zu erkennen ist, ist die zwischen das Basisteil 16 und die Kontaktbügel 18 eingesetzte flexible gedruckte Schaltung 12 in dem genannten Bereich zwischen den beiden Kontaktbügeln 18 geschlitzt, so daß ein jeweiliger leitender Bereich oder Abschnitt 28 der gedruckten Schaltung 12 zum betreffenden federnden Kontaktabschnitt 30 hin gefaltet werden kann. Der entsprechende Schlitz 40 ist insbesondere in Figur 2 zu erkennen.

Im vorliegenden Fall ist der am basisteilseitigen Ende eines jeweiligen Kontaktbügels 18 vorgesehene federnde Kontaktabschnitt 30 U-förmig ausgebildet. Die beiden Schenkel 30' der U-Form sind zum restlichen Kontaktbügel 18 hin allgemein V-förmig abgebogen (vgl. insbesondere Figuren 3 und 4). Dabei wird ein jeweiliger leitender Bereich 28 der gedruckten Schaltung 12 gegen den Steg 30'' des betreffenden U-förmigen federnden Kontaktabschnitts 30 gepreßt (siehe insbesondere die Figuren 3 und 4).

Demzufolge wird der Steg 30'' des betreffenden federnden Kontaktabschnitts 30 durch den Positionierkörper 26 entgegen der dem Kontaktabschnitt 30 innewohnenden Federkraft zum restlichen Kontaktbügel 18 hin zurückgedrängt, wodurch die Erzeugung einer hinreichenden permanenten Kontaktkraft gewährleistet ist.

Das Basisteil 16 ist im vorliegenden Fall Teil einer Lampenhalterung einer Fahrzeuginnenleuchte, wobei diese Fahrzeuginnenleuchte insbesondere eine Soffittenlampe umfassen kann.

Die Kontaktbügel 18 werden durch Haltebolzen 36 am Basisteil 16 zunächst positioniert und anschließend durch Kaltverstämmen der gegenüber den Kontaktbügeln 18 mit Übermaß ausgeführten Haltebolzen 36 fixiert.

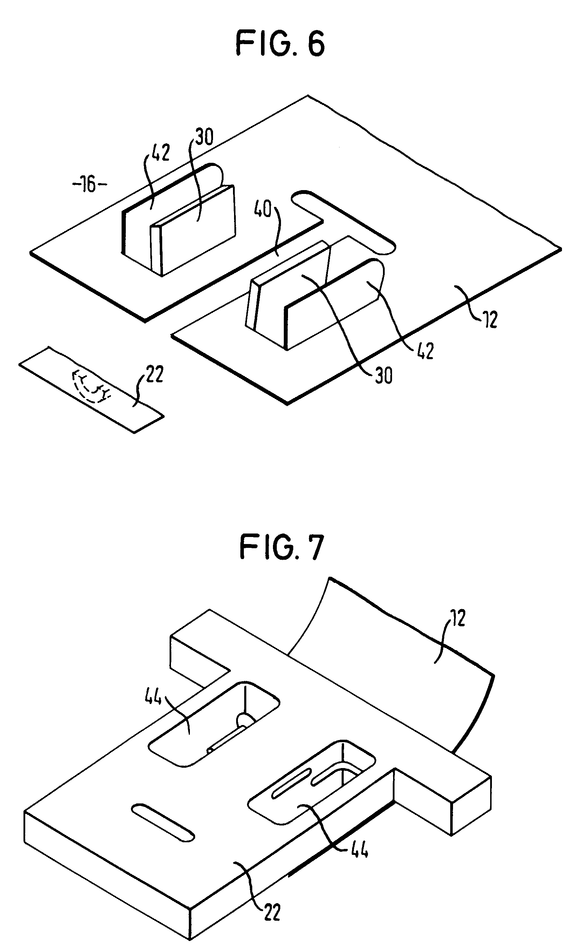

Figur 6 zeigt eine schematische Rückansicht der Anschlußvorrichtung bei seine Offenstellung einnehmendem Klemmbügel 22. Anhand dieser Figur 6 ist zu erkennen, daß sich die federnden Kontaktabschnitte 30 der beiden Kontaktbügel 18 durch das Basisteil 16 hindurch erstrecken und an ihren freien Enden V-förmig wieder auseinander laufen.

Wie in dieser Figur 6 gezeigt, wird die flexible gedruckte Schaltung 12 auf der Rückseite durch die V-förmig auseinander laufenden Enden der Kontaktbügel 18 und Teile 42 der Lampenhalterung positioniert. Anschließend kann der Klemmbügel 22 in seine Schließstellung verschwenkt und in dieser verrastet werden.

Figur 7 zeigt wieder in schematischer Rückansicht die Anschlußvorrichtung bei in die Schließstellung verschwenktem Klemmbügel 22. In dieser Figur 7 sind zudem Öffnungen 42 zu erkennen, durch die hindurch schließlich die federnden Kontaktabschnitte 30 und die Teile 42 der Lampenhalterung ( siehe auch Figur 6) eingeführt werden.

Wie am besten anhand der Figur 3 zu erkennen ist, wird durch den an dem Klemmbügel 22 vorgesehenen Positionierkörper 26 der jeweilige leitende Bereich 28 der flexiblen gedruckten Schaltung 12 zum betreffenden federnden Kontaktabschnitt 30 hin gefaltet und gegen dessen Steg 30'' gepreßt. Dadurch wird sowohl eine Positionierung der flexiblen gedruckten Schaltung 12 als auch der gewünschte elektrische Kontakt zwischen der gedruckten Schaltung 12 und dem Kontaktbügel 18 erreicht. Durch den federnden Kontaktabschnitt 30 ist für eine permanente Kontaktkraft gesorgt.

Der Positionierkörper 26 kann beispielsweise die aus der Figur 4 ersichtliche Form aufweisen und beispielsweise eine im Querschnitt teilkreisförmig gekrümmte Kontaktfläche besitzen. Dabei wird der Steg 30'' des betreffenden Kontaktbügels 18 zunehmend zum restlichen Kontaktbügel hin zurückgedrängt, wodurch sich eine zunehmend größere Federrückstellkraft ergibt, die schließlich für einen zuverlässigen permanenten Kontakt sorgt.

Die hergestellte Verbindung zwischen der flexiblen gedruckten Schaltung 12 und wenigstens einem Kontaktbügel 18 kann durch ein entsprechendes Einwirken auf die Rastnasen 32 ggf. wieder gelöst werden.

Die beiden sich vom Basisteil 16 weg erstreckenden oberen Schenkel 18'' der beiden Kontaktbügel 18 geben beim Einsetzen des Verbrauchers 14 federnd nach, bis die entsprechenden Kontaktteile des Verbrauchers in die Öffnungen 20 eingerastet sind. Ein einmal eingesetzter Verbraucher 14 kann somit lediglich entgegen der Federkraft der beiden Kontaktbügel 18 wieder herausgenommen werden.

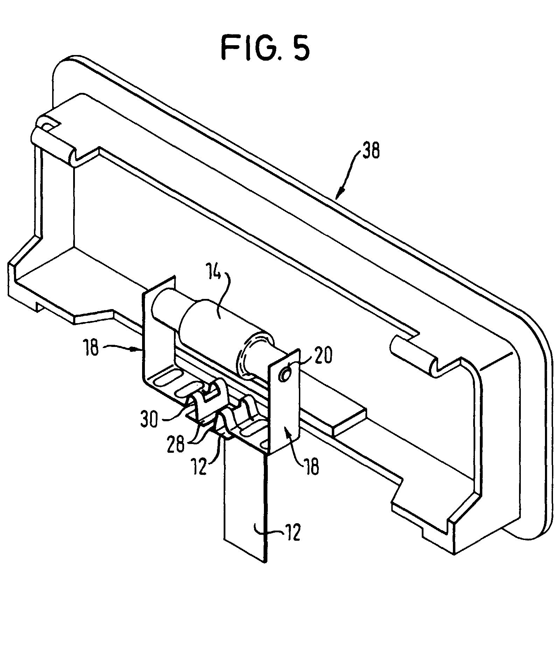

Figur 5 zeigt in schematischer Teildarstellung die beiden Kontaktbügel 18 mit dazwischen eingesetztem Verbraucher, wobei überdies ein zugeordneter Grundrahmen 38 gezeigt ist.

### Bezugszeichenliste

- 10: Anschlußvorrichtung
- 12: flexible gedruckte Schaltung
- 14: Verbraucher
- 16: Basisteil
- 18: Kontaktbügel
- 18': Schenkel
- 18'': Schenkel
- 20: Öffnung
- 22: Klemmbügel
- 24: Filmscharnier
- 26: Positionierkörper
- 28: leitender Bereich
- 30: federnder Kontaktabschnitt
- 30': Schenkel
- 30'': Steg
- 32: Rastnasen
- 34: Öffnung
- 36: Haltebolzen
- 38: Grundrahmen
- 40: Schlitz
- 42: Teile der Lampenhalterung
- 44: Öffnungen
- F: Pfeil

## Patentansprüche

1. Anschlußvorrichtung (10) für einen elektrischen Anschluß einer insbesondere flexiblen gedruckten Schaltung (12) an einen Verbraucher (14), der zwischen zwei elektrisch leitenden, an einem Basisteil (16) fixierbaren Kontaktbügeln (18) einsetzbar ist, insbesondere für eine Fahrzeuginnenleuchte,
dadurch **gekennzeichnet,**
daß an das nicht leitende Basisteil (16) ein in einer Schließstellung mit diesem verrastbarer Klemmbügel (22) angelenkt ist und daß am Klemmbügel ein Positionierkörper (26) vorgesehen ist, durch den bei in seine Schließstellung verschwenktem Klemmbügel (22) wenigstens ein leitender Bereich (28) der gedruckten Schaltung (12) gegen einen vorzugsweise federnden Kontaktabschnitt (30) eines Kontaktbügels (18) gepreßt wird.

2. Anschlußvorrichtung nach Anspruch 1,
dadurch **gekennzeichnet,**
daß der Klemmbügel (22) über wenigstens ein Filmscharnier (24) an das Basisteil (16) angelenkt ist.

3. Anschlußvorrichtung nach Anspruch 2 oder 3,
dadurch **gekennzeichnet,**
daß der Positionierkörper (26) so ausgebildet und durch den verschwenkbaren Klemmbügel (22) so geführt ist, daß mit einem Verschwenken des Klemmbügels (22) in seine Schließstellung der leitende Bereich (28) der gedruckten Schaltung (12) zunächst zum federnden Kontaktabschnitt (30) des betreffenden Kontaktbügels (18) hin gefaltet wird.

4. Anschlußvorrichtung nach einem der vorhergehenden Ansprüche,
dadurch **gekennzeichnet,**
daß der am Klemmbügel (22) vorgesehene Positionierkörper (26) in einen zwischen den beiden Kontaktbügeln (18) liegenden Bereich verschwenkbar ist.

5. Anschlußvorrichtung nach Anspruch 4,
dadurch **gekennzeichnet,**
daß der Klemmbügel (22) auf die von den Kontaktbügeln (18) abgewandte Seite des Basisteils (16) schwenkbar und der Positionierkörper (26) durch eine im Basisteil vorgesehene Öffnung (34) hindurch in den zwischen den beiden Kontaktbügeln (18) liegenden Bereich bewegbar ist.

6. Anschlußvorrichtung nach Anspruch 4 oder 5,
dadurch **gekennzeichnet,**
daß die insbesondere zwischen das Basisteil (16) und die Kontaktbügel (18) eingesetzte gedruckte Schaltung (12) in dem zwischen den beiden Kontaktbügeln (18) liegenden Bereich geschlitzt ist.

7. Anschlußvorrichtung nach einem der vorhergehenden Ansprüche,
dadurch **gekennzeichnet,**
daß der an einem Ende eines jeweiligen Kontaktbügels (18) vorgesehene federnde Kontaktabschnitt (30) U-förmig ausgebildet ist und die beiden Schenkel (30') der U-Form zum restlichen Kontaktbügel (18) hin allgemein V-förmig abgebogen sind.

8. Anschlußvorrichtung nach Anspruch 7,
dadurch **gekennzeichnet,**
daß ein jeweiliger leitender Bereich (28) der gedruckten Schaltung (12) gegen den Steg (30'') des betreffenden U-förmigen federnden Kontaktabschnitts (30) preßbar ist.

9. Anschlußvorrichtung nach einem der vorhergehenden Ansprüche,
dadurch **gekennzeichnet,**
daß das Basisteil (16) einer Lampenhalterung einer Fahrzeuginnenleuchte zugeordnet ist.
